# EUROPÄISCHE PATENTSCHRIFT

(11) **EP 1 217 041 B1**
(45) Veröffentlichungstag und Bekanntmachung des Hinweises auf die Patenterteilung: **04.02.2004**
(21) Anmeldenummer: 01125584.1
(22) Anmeldetag: 26.10.2001
(51) Int. Cl.: C08L 79/02, C08L 77/02, C08L 77/06

(54) **Formmasse mit guter Blasformbarkeit**
Molding easily blow-molded
Moulages faciles à mouler par soufflage

(30) Priorität: 21.12.2000 DE 10064338
(43) Veröffentlichungstag der Anmeldung: 26.06.2002
(73) Patentinhaber: Degussa AG, 40474 Düsseldorf (DE)
(72) Erfinder: Häger, Harald, Dr., 45665 Recklinghausen (DE); Schmitz, Guido, Dr., 48249 Dülmen (DE); Richter, Ralf, Dr., 45657 Recklinghausen (DE); Bartz, Wilfried, Dr., 45770 Marl (DE); Baumann, Franz-Erich, Dr., 48249 Dülmen (DE); Himmelmann, Martin, 45721 Haltern (DE); Oenbrink, Georg, Dr., 48249 Dülmen (DE)

(56) Entgegenhaltungen:
- DE-A- 19 654 179
- DE-A- 19 859 929

## Beschreibung

Gegenstand der Erfindung sind eine Formmasse auf Basis eines Polyamin/Polyamid-Copolymeren, die eine gute Blasformbarkeit aufweist, sowie daraus durch Blasformen hergestellte Artikel.

Durch den Blasformprozess werden üblicherweise Hohlkörper, wie Flaschen, Tanks, Rohrstücke usw. hergestellt. Dabei wird beim klassischen Extrusionsblasformen der so genannte Vorformling senkrecht nach unten extrudiert und nach Erreichen einer ausreichenden Länge in einem Werkzeug durch Anlegen von Blasluft zum Fertigteil ausgeformt. Neuere Entwicklungen in der Maschinentechnik haben zu weiteren Varianten des Blasformens geführt, z.B. zum 3D-Blasformen, bei dem der Vorformling durch einen geeignete Handling-Einheit in eine dreidimensionale Kavität eingelegt wird. Als weitere Verfahrensvariante ist das Saugblasformen zu nennen, bei welchem der Vorformling in eine geschlossene Kavität gesaugt wird. Hinsichtlich üblicher Blasformverfahren sei auf folgende Literaturstellen verwiesen:
- F. Hensen, W. Knappe, H. Potente (Hrsg.), Handbuch der Kunststoff-Extrusionstechnik II/Extrusionsanlagen, Carl Hanser Verlag München Wien 1986, Kapitel 12,
- F. Schüller, Plastverarbeiter, 49. Jahrgang, Nr. 7, Seiten 56-59
- sowie für den Fall des Coextrusionsblasformens W. Daubenbüchel, Kunststoffe 82 (1992), Seiten 201-206.

Allen Verfahrensvarianten des Blasformens ist gemein, dass eine hohe Schmehsesteiftgkeit erforderlich ist, um z.B. ein Auslängen des Vorformlings durch Schwerkrafteinfluss zu minimieren. Bei Polyamid gelingt es jedoch nicht, die Basisformmasse bei praktikablen Schmelzeviskositäten mit einer insbesondere für große Formteile ausreichend hohen Schmelzesteifigkeit auszustatten. Hinzu kommt als weiteres Problem die schlechtere Schneidbarkeit von Polyamiden im Vergleich beispielsweise zu Polyethylen. Dies bereitet beim Entfernen der so genannten Butzen durch Schneiden oder auch durch Abbrechen große Probleme.

Es war daher die Aufgabe der vorliegenden Erfindung, eine Polyamidformmasse mit einer hohen Schmelzesteifigkeit bereitzustellen, die gegenüber üblicherweise verwendeten Polyamidformmassen eine bessere Schneidbarkeit aufweist und für Blasformanwendungen geeignet ist.

Um zur Lösung dieser Aufgabe ein verzweigtes Polyamid einzusetzen, lag für den Fachmann keinesfalls nahe.

Verzweigte Copolymere auf Basis von Polyamin und Polyamid sind bekannt. Sie können beispielsweise durch kationische Polymerisation von Caprolactam in Gegenwart von Polyethyleniminhydrochlorid-Dendrimeren als Kernmolekül hergestellt werden (J. M. Warakomski, Chem. Mater. 1992, 4, 1000 - 1004). Derartige PA6-Dendrimere besitzen, verglichen mit linearem PA6, eine deutlich verringerte Schmelze- und Lösungsviskosität, aber unveränderte Zugfestigkeit, Steifigkeit, Schmelzpunkte, Schmelzwärmen und Barrierewirkung gegenüber Sauerstoff.

Pfropfcopolymere auf Basis von Polyvinylamin und Polyamid sind aus der US-PS 2 615 863 bekannt. In der US-PS 3 442 975 sind Pfropfcopolymere beschrieben, die durch Polymerisation von Lactamen in Gegenwart von hochmolekularem Polyethylenimin hergestellt werden.

Die DE-OS 19 15_{.}772 beschreibt Blends aus einem Polyimin/Polyamid- Pfropfcopolymer sowie einem Polyolefin und/oder Polyester, die zu leicht färbbaren Fasern verarbeitet werden.

Die DE-OS 198 59 929 offenbart verzweigte Polyamide, bei deren Herstellung ein mehrfunktionelles Amin mit eingesetzt wird. Die Produkte werden durch Festphasennachkondensation auf ein hohes Molekulargewichtsniveau gebracht

Schließlich werden in der DE-OS 196 54 179 H-förmige Polyamide beschrieben, die aus Lactamen bzw. Aminocarbonsäuren, einem mindestens trifunktionellen Amin, difunktionellen Carbonsäuren und monofunktioneller Carbonsäure hergestellt werden, wobei die beiden letzteren zueinander und zu den funktionellen Gruppen des mindestens trifunktionellen Amins in einem bestimmten Verhältnis stehen. Die Produkte weisen eine verbesserte Schmelzestabilität auf.

Darüber hinaus werden in der WO-A 96/35739 spezielle sternförmig verzweigte Polyamide beschrieben, deren Schmelzeviskosität nur in geringem Ausmaß von der Schergeschwindigkeit abhängt.

Schließlich sind Polyamin/Polyamid-Pfropfcopolymere in den nicht vorveröffentlichten deutschen Patentanmeldungen 100 05 640.7 und 100 05 639.3 beschrieben.

Aus dem angeführten Stand der Technik geht hervor, dass derartige Copolymere generell eine gute Fließfähigkeit aufweisen.

Überraschenderweise gelang es, die oben genannte Aufgabe mittels einer Formmasse zu lösen, die zu mindestens 50 Gew.-% aus einem Polyamin/Polyamid-Copolymer besteht, das unter Verwendung folgender Monomere hergestellt wird:
a) 0,05 bis 2,5 Gew.-%, bevorzugt 0,1 bis 2,0 Gew.-% und besonders bevorzugt 0,2 bis 1,5 Gew.-%, bezogen auf das Polyamin/Polyamid-Copolymer, eines nachstehend näher bezeichneten Polyamins sowie
b) polyamidbildende Monomere, ausgewählt aus Lactamen, ω-Aminocarbonsäuren und/oder äquimolaren Kombinationen aus Diamin und Dicarbonsäure,
wobei das Polyamin/Polyamid-Copolymer folgende Bedingungen erfüllt:
- eine Viskosität von mindestens 5 000 Pa·s bei 250 °C und einer Schergeschwindigkeit von 0,1 l/s;
- ein Viskositätsverhältnis bei 250 °C von mindestens 7, wobei die Schmelzeviskositäten bei Schergeschwindigkeiten von 0,1 l/s und 100 l/s miteinander verglichen werden.

Als Polyamin werden verzweigte Polyethylenimine eingesetzt, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
25 bis 46 % primäre Aminogruppen,
30 bis 45 % sekundäre Aminogruppen und
16 bis 40 % tertiäre Aminogruppen.

Das Polyamin besitzt ein zahlenmittleres Molekulargewicht Mₙ von mindestens 500 g/mol und bevorzugt von mindestens 800 g/mol sowie bevorzuzgt von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden wie Decamethylendiamin/Dodecandisäure/Terephthalsäure, Hexamethylendiamin/Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

In einer bevorzugten Ausführungsform wird das Polyamin/Polyamid-Copolymer zusätzlich unter Verwendung einer Oligocarbonsäure hergestellt, die ausgewählt ist aus 0,01 bis etwa 0,5 Mol-% Dicarbonsäure und 0,01 bis etwa 0,2 Mol-% Tricarbonsäure, jeweils bezogen auf die Summe der polyamidbildenden Monomere gemäß b). Bei dieser Bezugnahme wird bei der äquivalenten Kombination von Diamin und Dicarbonsäure jedes dieser Monomere einzeln betrachtet. Durch die Mitverwendung der Oligocarbonsäure wird nicht nur das rheologische Verhalten, sondern auch die Lösemittel- und Kraftstoffbeständigkeit deutlich verbessert, insbesondere die Hydrolyse- und Alkoholysebeständigkeit und die Spannungsrissbeständigkeit, aber auch das Quellungsverhalten und damit verbunden die Dimensionsbeständigkeit sowie die Sperrwirkung gegen Diffusion.

Als Oligocarbonsäure kann jede beliebige Di- oder Tricarbonsäure mit 6 bis 24 C-Atomen eingesetzt werden, beispielsweise Adipinsäure, Korksäure, Azelainsäure, Sebacinsäure, Dodecandisäure, Isophthalsäure, 2,6-Naphthalindicarbonsäure, Cyclohexan-1.4-dicarbonsäure, Trimesinsäure und/oder Trimellitsäure.

Zusätzlich können, falls gewünscht, aliphatische, alicyclische, aromatische, aralkylische und/oder alkylarylsubstituierte Monocarbonsäuren mit 3 bis 50 Kohlenstoffatomen wie z. B. Laurylsäure, ungesättigte Fettsäuren, Acrylsäure oder Benzoesäure als Regler eingesetzt werden. Mit diesen Reglern kann die Konzentration an Aminogruppen verringert werden, ohne die Molekülgestalt zu verändern. Zusätzlich können auf diese Weise funktionelle Gruppen wie Doppel- bzw. Dreifachbindungen etc. eingeführt werden.

Die erfindungsgemäßen Polyamin/Polyamid-Copolymere können nach verschiedenen Verfahren hergestellt werden.

Eine Möglichkeit besteht darin, Lactam bzw. ω-Amiaocarbonsäure und Polyamin zusammen vorzugeben und die Polymerisation bzw. die Polykondensation durchzuführen. Die Oligocarbonsäure kann entweder am Anfang oder im Verlauf der Reaktion zugegeben werden.

Ein bevorzugtes Verfahren besteht jedoch darin, dass in einem zweistufigen Prozess zuerst die Lactamspaltung und Präpolymerisation in Gegenwart von Wasser durchgeführt wird (alternativ werden die entsprechenden ω-Aminocarbonsäuren bzw. Diamine und Dicarbonsäuren direkt eingesetzt und präpolymerisiert); im zweiten Schritt wird das Polyamin zugegeben, während die gegebenenfalls mitverwendete Oligocarbonsäure vor, während oder nach der Präpolymerisation zudosiert wird. Dann wird bei Temperaturen zwischen 200 und 290 °C entspannt und im Stickstoffstrom oder im Vakuum polykondensiert.

Ein weiteres bevorzugtes Verfahren besteht im hydrolytischen Abbau eines Polyamids zu einem Präpolymer und gleichzeitige oder anschließende Reaktion mit dem Polyamin. Vorzugsweise werden Polyamide verwendet, bei denen die Endgruppendifferenz näherungsweise Null beträgt, oder bei denen die gegebenenfalls mitverwendete Oligocarbonsäure bereits einpolykondensiert ist. Die Oligocarbonsäure kann aber auch zu Anfang oder im Laufe der Abbaureaktion zugegeben werden.

Mit diesen Verfahren lassen sich ultrahochverzweigte Polyamide mit Säurezahlen kleiner als 40 mmol/kg, bevorzugt kleiner als 20 mmol/kg und besonders bevorzugt kleiner als 10 mmol/kg herstellen. Schon nach ein- bis fünfstündiger Reaktionszeit bei Temperaturen von 200 °C bis 290 °C wird ein annähernd vollständiger Umsatz erzielt.

Falls gewünscht, kann in einem weiteren Verfahrensschritt eine mehrstündige Vakuumphase angeschlossen werden. Diese dauert mindestens vier Stunden, bevorzugt mindestens sechs Stunden und besonders bevorzugt mindestens acht Stunden bei 200 bis 290 °C. Nach einer Induktionsperiode von mehreren Stunden wird dann eine Erhöhung der Schmelzeviskosität beobachtet, was darauf zurückzuführen sein dürfte, dass eine Reaktion von Aminoendgruppen miteinander unter Ammoniakabspaltung und Kettenverknüpfung stattfindet.

Falls man die Reaktion nicht in der Schmelze zu Ende führen will, kann das ultrahochverzweigte Polyamid gemäß dem Stand der Technik auch in fester Phase nachkondensiert werden.

Die Viskosität bei 250 °C und einer Schergeschwindigkeit von 0,1 l/s beträgt bevorzugt mindestens 7 000 Pa·s, besonders bevorzugt mindestens 9 000 Pa·s und ganz besonders bevorzugt mindestens 12 000 Pa·s. Sie wird in einem Kegel-Platte-Viskosimeter gemäß ASTM D 4440-93 bestimmt

Das Viskositätsverhältnis, das beim Vergleich der Schmelzeviskositäten bei Schergeschwindigkeiten von 0,1 l/s und 100 l/s bei 250 °C ermittelt wird, beträgt vorzugsweise mindestens 9 und besonders bevorzugt mindestens 12. Es kann einerseits durch Art und Menge des Polyamins und andererseits durch die eventuelle Mitverwendung einer Oligocarbonsäure beeinflusst werden. Generell gilt, dass das Viskositätsverhältnis umso höher ist, je mehr das Copolyamid verzweigt ist.

Neben dem Polyamin/Polyamid-Copolymer kann die Formmasse noch insgesamt bis zu etwa 50 Gew.-% Zusatzstoffe enthalten, die ausgewählt sind aus
- für Polyamide üblichen Schlagzähmachern, beispielsweise Ethylen/α-Olefin-Copolymeren (insbesondere EPM und EPDM) oder Styrol-Ethylen/Butylen-Blockcopolymeren (insbesondere SEBS), wobei in allen diesen Fällen der Schlagzähmacher zusätzlich funktionelle Gruppen wie z.B. Säureanhydrid trägt, oder auch α-Olefin/Acrylester-Terpolymere mit einem olefinisch ungesättigen Säureanhydrid, Glycidylacrylat oder Glycidylmethacrylat als Terkomponente;
- andere Polymere wie beispielsweise ein Polyamid wie z.B. PA6, PA11, PA12, PA612, PA1010, PA1012, PA1212, PA6,3T oder ein hierauf basierendes Copolyamid, ein thermoplastischer Polyester wie z.B. Polyethylenterephthalat, Polybutylenterephthalat, Polypropylenterephthalat, Polyethylen-2.6-naphthalat, Polypropylen-2.6-naphthalat, Polybutylen-2.6-naphthalat, ein hierauf basierender Copolyester, ein Polyolefin wie z.B. Polypropylen oder ein Fluorpolymer;
- Füllstoffe und Pigmente wie Ruß, Titandioxid, Glaskugeln, Hohlglaskugeln, Talkum, Zinksulfid, Silikate, Carbonate oder exfolierte bzw. interkalierte Schichtsilikate;
- Verstärkungsstoffe wie Glasfasern, Aramidfasern, Whiskers oder Nanotubes, z.B. auf Kohlenstoffbasis;
- Zusätze, die der Formmasse antielektrostatische Eigenschaften oder eine elektrische Leitfähigkeit verleihen wie z.B. Carbonfasern, Graphitfibrillen, Fasern aus rostfreiem Stahl oder Leitfähigkeitsruß;
- Flammschutzmittel wie Magnesiumhydroxid, Aluminiumhydroxid, Melamincyanurat, phosphorhaltige Flammschutzmittel, bromierte aromatische Verbindungen, auch z.B. bromiertes Polystyrol oder bromiertes Polycarbonat;
- übliche Hilfs- bzw. Zusatzstoffe wie z.B. Weichmacher, Wachse, Antioxidantien, UV-Stabilisatoren oder Nukleierungsmittel.

Die erfindungsgemäße Formmasse besitzt eine hohe Schmelzesteifigkeit und lässt sich daher gut blasformen. Durch Schneiden oder Abbrechen können Butzen problemlos entfernt werden. Trotzdem besitzt die Formmasse eine Tieftemperaturschlagzähigkeit, die etwa auf dem Niveau konventioneller Polyamidformmassen liegt.

Die Formmasse kann außer durch konventionelles Blasformen auch durch 3D-Blasformen, beispielsweise durch Schlauchextrusion in eine geöffnete Formhälfte, 3D-Schlauchmanipulation bzw. 3D-Saugblasverfahren, durch sequentielles Blasformen zur Herstellung von Hart-Weich-Verbunden oder durch jedes andere Blasformverfahren verarbeitet werden.

Weiterhin kann die Formmasse durch Coextrusionsblasformen, Coextrusions-3D-Blasformen, Coextrusions-Saugblasformen usw. zu einem Mehrschichtverbund verarbeitet werden.

Die hergestellten Formteile finden Verwendung insbesondere im Kraftfahrzeugsektor bzw. als Bauteil in einem Automobil, im allgemeineren Sinne etwa als Behälter oder Leitung für Flüssigkeiten oder Gase oder aber auch als Formteil, bei dem neben guter Chemikalienresistenz auch eine gute Kälteschlagzähigkeit gefordert wird. Beispiele hierfür sind die Verwendung als Tank, Tankeinfüllstutzen, Kühlflüssigkeitsleitung, Kraftstoffleitung, Vapor Line (d.h. Leitung, in der Kraftstoffdämpfe gefördert werden), Ausgleichsbehälter, Kühlsystem, Luftansaugschlauch, Achsmanschetten oder Vorratsbehälter. Diese Formteile können dem Stand der Technik entsprechend auch eine Sperrschicht gegenüber Kraftstoffkomponenten besitzen, beispielsweise aus einer Formmasse basierend auf thermoplastischem Polyester, EVOH oder einem Fluorpolymeren. Sie können ferner eine elektrisch leitfähige Schicht enthalten, die entweder auf der erfindungsgemäßen Formmasse oder auf anderen Polymeren basiert. Darüber hinaus können die Formteile, dem Stand der Technik entsprechend, auch Regenerat entweder als separate Schicht oder als Blendkomponente enthalten.

Die Erfindung soll im Folgenden beispielhaft erläutert werden.

Im Beispiel wurden folgende Materialien verwendet:
VESTAMID® ZA 7340: Ein hochviskoses PA12 der DEGUSSA-HÜLS AG mit einer relativen Lösungsviskosität ηᵣₑₗ von 2,1 und einer erhöhten Schmelzesteifigkeit.

### Polyamin/PA12-Copolymer:

49,75 kg Laurinlactam wurden in einem Aufheizkessel bei 180 bis 210 °C aufgeschmolzen und anschließend in einen druckfesten Reaktionskessel überführt. Dann wurden 5,7 g einer 50 %igen H₃PO₂-Lösung in Wasser sowie 2,5 kg Wasser zugegeben und auf 280 °C aufgeheizt Die Laurinlactamspaltung wurde hierbei unter dem sich einstellenden Eigendruck durchgeführt. Dann wurde auf 10 bar Wasserdampfdruck entspannt und 0,250 kg LUPASOL® G100 (ein Polyethylenimin der BASF AG) zugegeben. Die Reaktitinsmischung wurde unter dem sich einstellenden Eigendruck 30 Minuten gerührt, anschließend auf Normaldruck entspannt und 2 h unter Überleiten von Stickstoff polykondensiert.

Die klare Schmelze wurde über eine Schmelzepumpe ausgetragen, im Wasserbad abgekühlt, granuliert und getrocknet und anschließend in fester Phase im Stickstoffstrom bei einer Temperatur von 160 °C nachkondensiert.

| | |
|---|---|
| Kristallitschmelzpunkt Tₘ: | 175 °C |
| ηᵣₑₗ | 2,2 |
| Aminogruppenkonzentration | 90 mmol/kg |
| Carboxylendgruppenkonzentration | 20 mmol/kg |

**Tabelle 1:**

| Schmelzeviskositäten der verwendeten Formmassen gemessen auf einem mechanischen Rheometer (Kegel-Platte); 250°C | | | |
|---|---|---|---|
| | Viskosität bei 0,1 l/s [Pa·s] | Viskosität bei 100 l/s [Pa·s] | Viskositätsverhältnis |
| VESTAMID® ZA 7340 | 6200 | 1 700 | 3,6 |
| Polyamin/PA12-Copolymer | 79 000 | 2 600 | 30 |

Die Ergebnisse aus der Tabelle 1 zeigen, dass das erfindungsgemäße Copolymer bei einer Schergeschwindigkeit von 0,1 l/s (näherungsweise typisch für einen Schmelzeschlauch außerhalb des Extrusionswerkzeuges) eine erheblich höhere Viskosität als das VESTAMID® ZA 7340 besitzt. Dagegen liegt die Schmelzeviskosität bei einer Schergeschwindigkeit von 100 l/s (näherungsweise typisch für die Schmelze im Extrusionswerkzeug) nur um den Faktor 1,5 höher.

### Beispiel:

Auf einer Krupp Kautex Typ KEW 401 wurden Flaschen mit einem Volumen von 0,5 l hergestellt; das Verfahren gliederte sich in folgende zeitlich aufeinander folgende Prozesse:
- Extrusion des Vorformlings
- Werkzeug fährt vor und schließt sich um den Vorformling
- Schlagmesser trennt Schmelzeschlauch ab
- Werkzeug fährt zurück
- Der Blasdorn wird senkrecht in die Form eingeführt
- Blasprozess
- Öffnen des Werkzeuges und Ausstoßen des Fertigteils.

Hierbei zeigt sich die deutliche Überlegenheit des erfindungsgemäßen Copolymers. Während im Fall des VESTAMID® ZA 7340 der Schmelzeschlauch aufgrund seines Eigengewichts durchhing und diese Formmasse beim Schneiden am Messer kleben blieb (was zu einem nicht vollständig ausgeformten Flaschenhals führte), zeigte das Copolymer diese Probleme nicht.

## Patentansprüche

1. Formmasse, die zu mindestens 50 Gew.-% aus einem Polyamin/Polyamid-Copolymer besteht, das unter Verwendung folgender Monomere hergestellt wird:
a) 0,05 bis 2,5 Gew.-%, bezogen auf das Polyamin/Polyamid-Copolymer, eines Polyamins in Form eines verzweigten Polyethylenimins mit folgender Aminogruppenverteilung:
25 bis 46 % primäre Aminogruppen,
30 bis 45 % sekundäre Aminogruppen und
16 bis 40 % tertiäre Aminogruppen
sowie einem zahlenmittleren Molekulargewicht Mₙ von mindestens 500 g/mol,
b) polyamidbildende Monomere, ausgewählt aus Lactamen, ω-Aminocarbonsäuren und/oder äquimolaren Kombinationen von Diamin und Dicarbonsäure,
**dadurch gekennzeichnet,**
**dass** das Polyamin/Polyamid-Copolymer folgende Bedingungen erfüllt:
- eine Viskosität von mindestens 5 000 Pa·s bei 250 °C und einer Schergeschwindigkeit von 0,1 l/s;
- ein Viskositätsverhältnis bei 250 °C von mindestens 7, wobei die Schmelzeviskositäten bei Schergeschwindigkeiten von 0,1 l/s und 100 l/s miteinander verglichen werden.

2. Formmasse gemäß Anspruch 1,
**dadurch gekennzeichnet,**
**dass** das Polyamin/Polyamid-Copolymer zusätzlich unter Verwendung einer Oligocarbonsäure hergestellt ist, die ausgewählt ist aus 0,01 bis 0,5 Mol-% Dicarbonsäure und 0,01 bis 0,2 Mol-% Tricarbonsäure, jeweils bezogen auf die Summe der polyamidbildenden Monomere gemäß b).

3. Formmasse gemäß einem der vorhergehenden Ansprüche,
**dadurch gekennzeichnet,**
**dass** das Viskositätsverhältnis bei 250 °C mindestens 9 beträgt.

4. Formmasse gemäß einem der vorhergehenden Ansprüche,
**dadurch gekennzeichnet,**
**dass** das Viskositätsverhältnis bei 250 °C mindestens 12 beträgt.

5. Verwendung der Formmasse gemäß einem der vorhergehenden Ansprüche zum Blasformen.

6. Verwendung gemäß Anspruch 5,
**dadurch gekennzeichnet,**
**dass** es sich beim Blasformen um konventionelles Blasformen, 3D-Blasformen oder sequentielles Blasformen handelt.

7. Blasgeformter Artikel, der die Formmasse gemäß einem der Ansprüche 1 bis 4 enthält.

8. Artikel gemäß Anspruch 7,
**dadurch gekennzeichnet,**
**dass** er entweder ganz aus der Formmasse gemäß einem der Ansprüche 1 bis 5 besteht oder dass er diese Formmasse als eine von mehreren Schichten enthält.

9. Artikel gemäß Anspruch 8,
**dadurch gekennzeichnet,**
**dass** er eine Sperrschicht gegenüber Kraftstoffkomponenten besitzt.

10. Artikel gemäß einem der Ansprüche 7 bis 9,
**dadurch gekennzeichnet,**
**dass** er eine elektrisch leitfähige Schicht enthält.

11. Artikel gemäß einem der Ansprüche 7 bis 10,
**dadurch gekennzeichnet,**
**dass** er Regenerat entweder als separate Schicht oder als Blendkomponente enthält.

## Claims

1. A moulding composition composed of at least 50% by weight of a polyamine-polyamide copolymer and prepared using the following monomers:
a) from 0.05 to 2.5% by weight, based on the polyamine-polyamide copolymer, of a polyamine in the form of a branched polyethyleneimine having the following distribution of amino groups:
from 25 to 46% of primary amino groups,
from 30 to 45% of secondary amino groups, and
from 16 to 40% of tertiary amino groups,
and having a number-average molar mass Mₙ of at least 500 g/mol,
b) polyamide-forming monomers selected from lactams, ω-aminocarboxylic acids, and/or equimolar combinations of diamine and dicarboxylic acids,
**characterized in that**
the polyamine-polyamide copolymer fulfils the following conditions:
- a viscosity of at least 5 000 Pa·s at 250°C and at a shear rate of 0.1 l/s;
- a viscosity ratio of at least 7 at 250°C, when the melt viscosities at shear rates of 0.1 l/s and 100 l/s are compared with one another.

2. A moulding composition according to claim 1,
**characterized in that**
the polyamine-polyamide copolymer is prepared with the additional use of an oligocarboxylic acid selected among from 0.01 to 0.5 mol% of dicarboxylic acid and from 0.01 to 0.2 mol% of tricarboxylic acid, based in each case on the entirety of the polyamide-forming monomers of b).

3. A moulding composition according to either of the preceding claims,
**characterized in that**
the viscosity ratio is at least 9 at 250°C.

4. A moulding composition according to any of the preceding claims,
**characterized in that**
the viscosity ratio is at least 12 at 250°C.

5. The use of the moulding composition according to any of the preceding claims for blow moulding.

6. The use according to claim 5,
**characterized in that**
the blow moulding is conventional blow moulding, 3D blow moulding, or sequential blow moulding.

7. A blow-moulded item which comprises the moulding composition according to any of claims 1 to 4.

8. An item according to claim 7,
**characterized in that**
it is either entirely composed of the moulding composition according to any of claims 1 to 5 or comprises that moulding composition as one of two or more layers.

9. An item according to claim 8,
**characterized in that**
it has a barrier layer active against fuel components.

10. An item according to any one of claims 7 to 9,
**characterized in that**
it comprises an electrically conductive layer.

11. An item according to any one of claims 7 to 10,
**characterized in that**
it comprises regrind, either as a separate layer or as a blend component.

## Revendications

1. Masse moulée qui consiste pour au moins 50 % en poids en un copolymère polyamine/polyamide que l'on prépare en utilisant les monomères suivants :
a) de 0,05 à 2,5 % en poids, rapporté au copolymère polyamine/polyamide, d'une polyamine sous forme d'une polyéthylène-imine ramifiée, ayant la répartition suivante de groupes amine :
- de 25 à 46 % de groupes aminé primaire,
- de 30 à 45 % de groupes amine secondaire, et
- de 16 à 40 % de groupes amine tertiaire
ainsi qu'un poids moléculaire Mₙ de moyenne numérique, d'au moins 500 g/moL
b) des monomères qui forment des polyamides choisis parmi les lactames, les acides ω-aminocarboxyliques et/ou des combinaisons équimoléculaires de diamines et d'acides dicarboxyliques
**caractérisée en ce que**
le copolymère polyamine/polyamide remplit les conditions suivantes :
- une viscosité d'au moins 5000 Pas à 250°C et à une vitesse de cisaillement de 0,1 l/s,
- un rapport de viscosité à 250°C d'au moins 7, en comparant l'une avec l'autre les viscosités à la fusion pour des vitesses de cisaillement de 0,1 l/s et 100 l/s.

2. Masse moulée selon la revendication 1,
**caractérisée en ce que**
le copolymère polyamine/polyamide est préparé en utilisant en supplément un acide oligocarboxylique qui est choisi parmi 0,01 à 0,5 % molaire d'acide dicarboxylique et de 0,01 à 0,2 % molaire d'acide tricarboxylique, à chaque fois rapporté à la somme des monomères formateurs de polyamide selon b).

3. Masse moulée selon l'une quelconque des revendications précédentes,
**caractérisée en ce que**
le rapport de viscosité à 250°C s'élève à au moins 9.

4. Masse moulée selon l'une quelconque des revendications précédentes,
**caractérisée en ce que**
le rapport de viscosité à 250°C s'élève à au moins 12.

5. Utilisation des masses moulées selon l'une quelconque des revendications précédentes en vue du moulage par soufflage.

6. Utilisation selon la revendication 5,
**caractérisée en ce qu'**
il s'agit en ce qui concerne le moulage par soufflage, de moulage conventionnel par soufflage, de moulage par soufflage en 3D, ou de moulage par soufflage séquentiel.

7. Article moulé par soufflage qui renferme la masse moulée selon l'une quelconque des revendications 1 à 4,

8. Article selon la revendication 7,
caractêrisé en ce que
soit il consiste en totalité en la masse moulée selon l'une quelconque des revendications 1 à 5, soit en ce qu'il renferme cette masse moulée sous forme d'une ou de plusieurs couches.

9. Article selon la revendication 8,
**caractérisé en ce qu'**
il possède une couche barrière contre les composants de carburant.

10. Article selon l'une quelconque des revendications 7 à 9,
**caractérisé en ce qu'**
il renferme une couche conductrice de l'électricité.

11. Article selon l'une quelconque des revendications 7 à 10,
**caractérisé en ce qu'**
il renferme du caoutchouc récupéré soit sous forme de couche séparée soit comme composant du mélange.
